# EUROPEAN PATENT APPLICATION

(11) **EP 4 660 916 A1**
(43) Date of publication of application: **10.12.2025**
(21) Application number: 23920136.1
(22) Date of filing: 05.12.2023
(51) Int. Cl.: G06Q 20/14, G06Q 20/02, G06Q 50/40

(54) **METHOD FOR IMPLEMENTING PAYMENT SYSTEM IN EV ECHO SYSTEM, AND APPARATUS FOR PERFORMING METHOD**

(30) Priority: 30.01.2023 KR 20230011985
(71) Applicant: Aizen Global Co., Inc., Seoul 07242 (KR)
(72) Inventor: KANG, Jung Seok, Seoul 04386 (KR)
(74) Representative: AWA Sweden AB
(86) International application number: PCT/KR2023/019934
(87) International publication number: WO 2024/162587

(57) **Abstract**

The present invention relates to a method for implementing a payment system in an EV echo system, and an apparatus for performing the method. The method for implementing a payment system in an EV echo system may comprise steps in which an EV echo system management device: receives data about E-points in an EV echo ecosystem; and adjusts issuance of E-points on the basis of a set inflation rate.

## Description

### [Technical Field]

The present invention relates to a method of implementing a payment system in an electric vehicle (EV) ecosystem and an apparatus for performing the method. More specifically, the present invention relates to a method of implementing a payment system in an EV ecosystem that manages economic and industrial changes caused by operation of an EV as an EV ecosystem and enables payments within the EV ecosystem, and an apparatus for performing the method.

### [Background Art]

The automobile industry is an industry in which technological and business ecosystems change according to changes in technological resources. With the introduction of electric vehicles (EVs), various ecosystems may be formed between EV-related businesses and EV-related technologies.

When EVs are used, EV charging may trigger various changes in industrial ecosystems. Issues related to the increase of charging facilities for EV charging and power supply to EV charging facilities, issues related to reduction of environmental pollution due to EV use, issues related to data generated during EV charging and operation, and various other economic and industrial issues different from the existing issues may arise.

Research is needed on methods of managing these various issues that may arise from EVs through ecosystems and connecting various entities within the ecosystem to generate synergy and develop new industries.

The related art is disclosed in Korean Registered Patent No. 10-2283148.

### [Description of Invention]

### [Technical Problem]

The present invention aims to resolve all of the limitations described above.

In addition, the present invention aims to provide a payment system that performs E-point-based payments within an EV ecosystem for managing economic or industrial changes caused by operation of an EV as a single economic ecosystem or industrial ecosystem.

In addition, the present invention aims to manage E-points used as a payment method in a payment system within an EV ecosystem based on EV eco data generated by EV ecosystem participating devices.

### [Technical Solution]

To achieve the purposes above, the representative component of the present invention is as below.

According to an aspect of the present invention, there is provided a method of implementing a payment system in an electric vehicle (EV) ecosystem, the method comprising receiving, by an EV ecosystem management device, data regarding E-points within an EV ecosystem; and adjusting, by the EV ecosystem management device, issuance of the E-points based on a set inflation rate.

Meanwhile, wherein the data regarding the E-points includes data regarding supply and demand of the E-points; and the data regarding the E-points is collected based on EV ecosystem participating device groups.

Further, wherein the set inflation rate is adaptively adjusted considering an expansion value of the EV ecosystem.

According to another aspect of the present invention, there is provided an electric vehicle (EV) ecosystem management device for implementing a payment system, which is implemented to receive data regarding E-points within an EV ecosystem; and adjust issuance of the E-points based on a set inflation rate.

Meanwhile, wherein the data regarding the E-points includes data regarding supply and demand of the E-points; and the data regarding the E-points is collected based on EV ecosystem participating device groups.

Further, wherein the set inflation rate is adaptively adjusted considering an expansion value of the EV ecosystem.

### [Advantageous Effects]

According to the present invention, a payment system that performs E-point-based payments within an EV ecosystem for managing economic or industrial changes caused by operation of an EV as a single economic ecosystem or industrial ecosystem is provided

According to the present invention, manage E-points used as a payment method in a payment system within an EV ecosystem based on EV eco data generated by EV ecosystem participating devices is managed.

### [Description of Drawings]

FIG. 1 is a conceptual diagram illustrating an EV ecosystem according to an embodiment of the present invention.
FIG. 2 is a conceptual diagram illustrating the operation of an EV ecosystem management device according to an embodiment of the present invention.
FIG. 3 is a conceptual diagram illustrating the EV ecosystem environment and the EV ecosystem according to an embodiment of the present invention.
FIG. 4 is a conceptual diagram illustrating the operation of the EV ecosystem participation device management unit according to an embodiment of the present invention.
FIG. 5 is a conceptual diagram illustrating the operation of the EV ecosystem participation device management unit according to an embodiment of the present invention.
FIG. 6 is a conceptual diagram illustrating a method of managing a network by the EV ecosystem network management unit according to an embodiment of the present invention.
FIG. 7 is a conceptual diagram illustrating a method of managing E-points within an EV ecosystem environment based on ecosystem participation device groups according to an embodiment of the present invention.
FIG. 8 is a conceptual diagram illustrating an operation of an EV ecosystem point management unit according to an embodiment of the present invention.
FIG. 9 is a conceptual diagram illustrating the operation of the EV ecosystem point management unit according to an embodiment of the present invention.

### [Modes of the Invention]

The detailed description of the present invention will be made with reference to the accompanying drawings showing examples of specific embodiments of the present invention. These embodiments will be described in detail such that the present invention can be performed by those skilled in the art. It should be understood that various embodiments of the present invention are different but are not necessarily mutually exclusive. For example, a specific shape, structure, and characteristic of an embodiment described herein may be implemented in another embodiment without departing from the scope and spirit of the present invention. In addition, it should be understood that a position or arrangement of each component in each disclosed embodiment may be changed without departing from the scope and spirit of the present invention. Accordingly, there is no intent to limit the present invention to the detailed description to be described below. The scope of the present invention is defined by the appended claims and encompasses all equivalents that fall within the scope of the appended claims. Like reference numerals refer to the same or like elements throughout the description of the figures.

Hereinafter, in order to enable those skilled in the art to practice the present invention, exemplary embodiments of the present invention will be described in detail with reference to the accompanying drawings.

Hereinafter, for convenience of description, the present invention discloses the provision of a financial service mainly based on a value evaluation of a battery for a battery electric vehicle, but the method of providing a financial service based on the battery electric vehicle itself, which includes the battery for the battery electric vehicle, may be included in the embodiment of the present invention.

In addition, hereinafter, for convenience of description, it is assumed that the battery electric vehicle residual value is determined based on a residual value of a battery for a battery electric vehicle, but the battery electric vehicle residual value may be determined by various factors other than the battery, and these embodiments may also be included in the scope of the present invention.

Hereinafter, the disclosed electric vehicle (EV), EV charging station, EV power plant, user company may be interpreted as EVs, EV charging stations, EV power plants, users, user devices of companies, servers, and the like, which are capable of processing data.

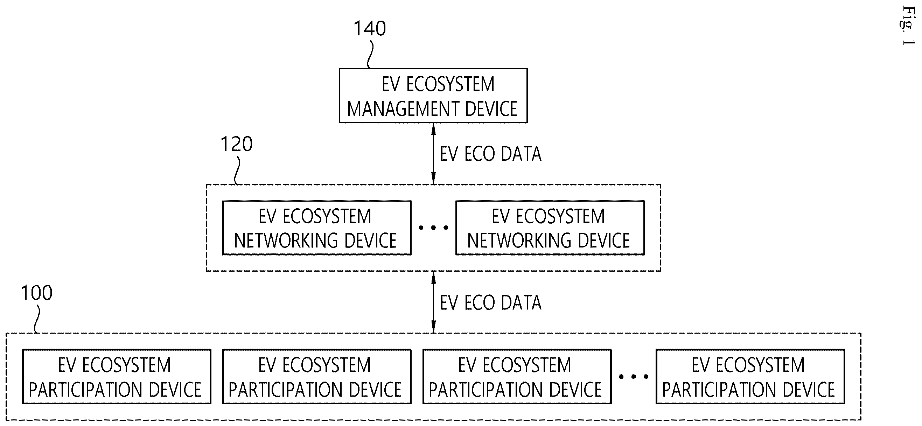

FIG. 1 is a conceptual diagram illustrating an EV ecosystem according to an embodiment of the present invention.

In FIG. 1, an EV ecosystem implemented and expanded based on EVs is disclosed.

Referring to FIG. 1, the EV ecosystem is a system for managing economic and/or industrial changes caused by operations of EVs as a single ecosystem. The ecosystem managed by the EV ecosystem may be expressed by the term "EV ecosystem environment."

The EV ecosystem may include an EV ecosystem participation device 100, an EV ecosystem networking device 120, and an EV ecosystem management device 140.

The EV ecosystem participation device 100 may be a device that participates in the EV ecosystem. The EV ecosystem participation device 100 may be devices of various entities having economic and industrial relevance to the operations of EVs, such as EVs, a user device of a user driving the EV, a charger for providing power to EVs, a charging station for providing power to EVs, and a device of a company associated with EVs (e.g., a corporate service provision server). The EV ecosystem participation device 100 generates EV eco data, and the EV eco data may be transmitted to the EV ecosystem management device 140 through the EV ecosystem networking device 120.

The EV ecosystem participation device 100 may be a device capable of utilizing E-points. A specific company may purchase carbon emission rights from other companies and users based on E-points and may also sell products or services produced by the company based on E-points. That is, even when a device is not directly related to EVs but engages in economic activities based on E-points related to carbon emission rights, the device may operate within the EV ecosystem environment as an EV ecosystem participation device 100.

The EV eco data may include various types of data for managing and implementing the EV ecosystem. EV eco data may include different information depending on the EV ecosystem participation device 100. For example, EV eco data generated by EVs may include charging data, operation data, and the like, and EV eco data generated by EV charging stations may include power supply data, charging statistics data, and the like

The EV ecosystem networking device 120 may be implemented to form a network between the EV ecosystem participation devices 100. The EV ecosystem participation devices 100 may be expanded and added within the EV ecosystem, and the EV ecosystem networking device 120 may be implemented to establish the network between EV ecosystem participation devices 100. For example, when a new EV is operated or a new EV charging station and a new EV power plant are added, identifiers may be assigned to each of the new EVs, the new EV charging station, and the new EV power plant. The EV ecosystem networking device 120 may receive EV eco data generated from the new EV, the new EV charging station, and the new EV power plant and transmit the data to the EV ecosystem management device 140.

The EV ecosystem management device 140 may be implemented to manage the EV ecosystem based on the EV eco data collected by the EV ecosystem networking device 120. For example, the EV ecosystem management device 140 may set exchange points such as E-points for economic integration within the EV ecosystem and enable the use of E-points through an integrated payment system. More specifically, the EV ecosystem management device 140 may convert various industrial and economic activities performed within the EV ecosystem into units such as E-points and provide an integrated payment system to utilize the E-points in various areas within the EV ecosystem.

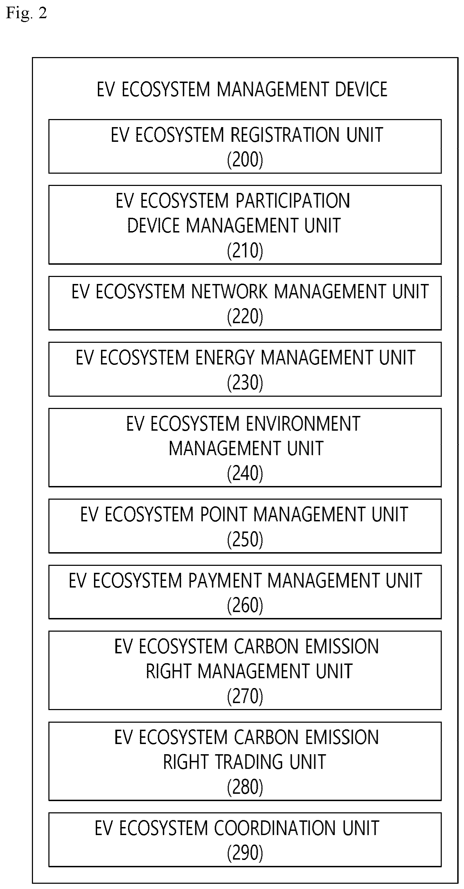

FIG. 2 is a conceptual diagram illustrating the operation of an EV ecosystem management device according to an embodiment of the present invention.

In FIG. 2, an operation in which the EV ecosystem management device participating in the EV ecosystem manages a plurality of EV ecosystem participation devices is disclosed.

Referring to FIG. 2, the EV ecosystem management device may include an EV ecosystem registration unit 200, an EV ecosystem participation device management unit 210, an EV ecosystem network management unit 220, an EV ecosystem energy management unit 230, an EV ecosystem environment management unit 240, an EV ecosystem point management unit 250, an EV ecosystem payment management unit 260, an EV ecosystem carbon emission right management unit 270, an EV ecosystem carbon emission right trading unit 280, and an EV ecosystem coordination unit 290.

The EV ecosystem registration unit 200 may be implemented to register EV ecosystem participation devices. The EV ecosystem registration unit 200 may assign identification information to EV ecosystem participation devices. Based on the identification information, EV ecosystem participation devices that have generated EV eco data may be distinguished, and the EV eco data may be processed on the EV ecosystem management device.

The EV ecosystem participation device management unit 210 may be implemented to manage relationships between EV ecosystem participation devices. A plurality of EV ecosystem participation devices may form hierarchical relationships with each other or may be grouped together and managed as EV ecosystem participation device groups considering mutual relationships.

The EV ecosystem participation device layers and the EV ecosystem participation device groups managed by the EV ecosystem participation device management unit 210 may be adaptively changed, and the management of networks between EV ecosystem participation devices, E-points, E-point payments, and the like may change according to changes in EV ecosystem participation device layers and EV ecosystem participation device groups.

The EV ecosystem network management unit 220 may be implemented to manage networks between EV ecosystem participation devices. The networks may be set differently according to addition and omission of EV ecosystem participation devices and changes in EV ecosystem participation device layers and EV ecosystem participation device groups, and the EV ecosystem network management unit 220 may manage the networks between EV ecosystem participation devices.

The EV ecosystem energy management unit 230 may be implemented to manage electrical energy for charging EVs. Electrical energy may be generated based on various sources (thermal, nuclear, solar, wind, and the like), and the generated electrical energy may be delivered to EVs through EV charging stations. The demand for electrical energy may vary with time and location.

The EV ecosystem energy management unit 230 may enable electrical energy to be efficiently utilized in the EV ecosystem environment through management of sources generating electrical energy and management of targets using electrical energy. For example, the EV ecosystem energy management unit 230 may set different electrical energy sales costs for each source that generates electrical energy. For example, the more eco-friendly (renewable energy-based generation) the power generation is, the more it reduces carbon emissions, and in consideration of such carbon emission reduction effect, electrical energy prices may be set higher. Alternatively, renewable energy-based generation may be induced by providing incentives for eco-friendly power generation.

Alternatively, electrical energy generated at specific times (e.g., night) may be wasted because there are not many EVs charging. Therefore, considering the demand for electrical energy according to location and time, the electrical energy may be set to be sold at different prices according to time and location. Sales and payment of electrical energy may be performed based on E-points, and E-points may be managed by the EV ecosystem point management unit 250 and the EV ecosystem payment management unit 260.

The EV ecosystem environment management unit 240 may be implemented to manage factors related to environmental protection in the EV ecosystem environment and manage incentives according to environmental protection. For example, the EV ecosystem environment management unit 240 may determine the allocation of E-points, the provision of carbon emission rights, and the like, considering incentives for environmental protection and carbon emission reduction within the EV ecosystem environment, such as how much incentive to provide when selling solar-based electrical energy, and how much value to assign to carbon emission rights of users based on carbon emission reduction from EV use.

The EV ecosystem point management unit 250 may be implemented to manage E-points. E-points may be exchange points for economic activities within the EV ecosystem environment. For example, E-points may be generated by users converting fiat currency or cryptocurrency for EV charging. Alternatively, E-points may be allotted to users considering carbon emissions saved through EV operation of users. Alternatively, E-points may be paid in the form of incentives (or subsidies) considering environmental protection to power plants generating electrical energy based on solar power. E-points may also be used to purchase products or services of various companies constituting the EV ecosystem environment.

The EV ecosystem point management unit 250 may control inflation and deflation of E-points through issuance and cancellation of E-points such that E-point-based economic activities may occur within the EV ecosystem environment.

The EV ecosystem payment management unit 260 may be implemented to manage an E-point-based payment system. The E-point-based payment system may install payment systems in online stores/offline stores capable of payment based on E-points and manage the payment systems to enable E-point-based payments.

The EV ecosystem carbon emission right management unit 270 may be implemented to manage carbon emission rights of EV ecosystem participation devices. Management of carbon emission rights for users (individuals or companies) may be performed through the EV ecosystem carbon emission right management unit 270. Individuals may acquire carbon emission rights through personal activities that relatively reduce carbon emissions, such as EV operation and EV charging times. Companies may acquire corporate carbon emission rights through activities (EV production, renewable energy-based electrical energy production, and the like) that relatively reduce carbon emissions. Conversely, when individuals or companies perform activities that relatively increase carbon emissions, carbon emission rights may be recovered again.

The EV ecosystem carbon emission right management unit 270 may manage carbon emission rights to generate or recover carbon emission rights based on activity data of EV ecosystem participation devices participating in the EV ecosystem environment as individuals and companies.

In addition, the EV ecosystem carbon emission right management unit 270 may liquidate carbon emission rights into tradeable units to enable trading of carbon emission rights.

The EV ecosystem carbon emission right trading unit 280 may be implemented to enable trading of carbon emission rights between EV ecosystem participation devices. Carbon emission rights allocated to individuals or companies may be traded, and the EV ecosystem carbon emission right trading unit 280 may provide an exchange system to enable trading of carbon emission rights.

The EV ecosystem coordination unit 290 may be implemented to coordinate and control the EV ecosystem participation devices, the EV ecosystem networking device, and the like operating within the EV ecosystem.

In addition, the EV ecosystem coordination unit 290 may be implemented as a processor to control operations of the EV ecosystem registration unit 200, the EV ecosystem participation device management unit 210, the EV ecosystem network management unit 220, the EV ecosystem energy management unit 230, the EV ecosystem environment management unit 240, the EV ecosystem point management unit 250, the EV ecosystem payment management unit 260, the EV ecosystem carbon emission right management unit 270, and the EV ecosystem carbon emission right trading unit 280.

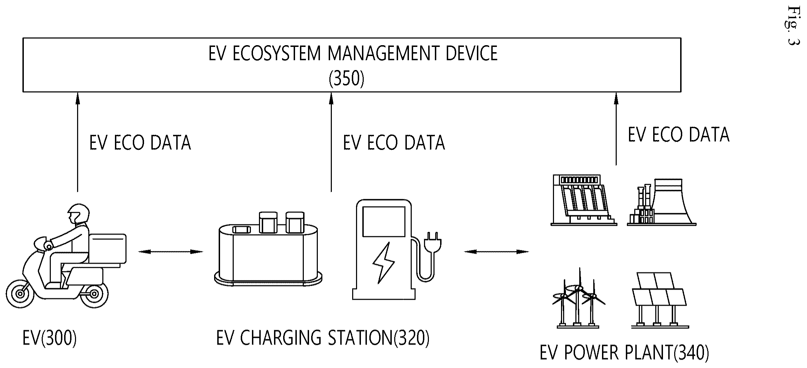

FIG. 3 is a conceptual diagram illustrating the EV ecosystem environment and the EV ecosystem according to an embodiment of the present invention.

FIG. 3 shows an example of a method of implementing an EV ecosystem environment based on EV ecosystem participation devices and managing the EV ecosystem based on an EV ecosystem management device. In FIG. 3, for convenience of explanation, an EV ecosystem environment based on an operation in which an EV charging station receives electrical energy from an EV power plant and a user charges an EV through the EV charging station is exemplarily disclosed, but various other EV and electrical energy-based industrial and economic activity areas may also be implemented as an EV ecosystem environment, and such embodiments may also be included in the scope of the present invention.

Referring to FIG. 3, an EV 300 may be an electric motorcycle, and the user may provide a delivery service using the EV 300. The battery for driving the EV 300 may be charged in the form of replacement at an EV charging station 320.

The user of the EV 300 may charge E-points through an app. E-point charging may be accomplished through various methods. For example, E-point charging may be accomplished through various methods such as purchasing E-points with fiat currency, converting to E-points through sales of personal carbon emission rights, and the like

The user of the EV 300 may convert the E-points to mileage (or chargeable electrical energy) through the app. For example, 100 E-points may be converted to 100 km of mileage and exchanged for electrical energy (or a battery) capable of driving 100 km.

When the user exchanges the EV battery, the mileage may be deducted and a new battery may be installed in the EV 300.

Data related to the EV battery exchange activity of the user and the EV operation of the user may be transmitted as EV eco data to the EV ecosystem management device through the EV ecosystem networking device.

Carbon emission rights may be allocated to the user based on the EV battery exchange activity of the user and the EV operation of the user. For example, based on EV eco data of the user, such as EV operation mileage of the user, battery exchange activity of the user, and EV operation records of the user, activities of the user that have reduced carbon emissions and activities of the user that have enabled the battery life to be maintained for a long time are analyzed based on the EV eco data, and carbon emission rights may be allocated to the user based on the analysis.

The user may trade the carbon emission rights through an app installed on the user device to convert the carbon emission rights to E-points, and the E-points may be utilized for the user to exchange a battery later or purchase goods/services from companies corresponding to EV ecosystem participation devices.

The EV charging station 320 may be implemented for EV battery exchange, EV battery charging, and the like. The EV charging station 320 may transmit information about EV battery exchange data, EV battery charging data, and the like of a plurality of users as EV eco data to the EV ecosystem management device.

The electrical energy used for charging at the EV charging station 320 may be sold based on different amounts of E-points. Generated electrical energy is wasted if not used. Therefore, the EV ecosystem management device may adaptively set E-points per kWh for electrical energy according to time or location based on EV eco data collected from a plurality of EV charging stations 320 to sell electrical energy at different prices.

In addition, the electrical energy may be sold at different prices for each EV power plant 340 in consideration of the power generation source of the EV power plant 340. For example, electrical energy generated based on renewable energy (solar, wind, and the like) may be purchased by paying relatively higher E-points upon purchase. That is, incentives are provided upon the purchase of electrical energy to promote increased power generation based on renewable energy at the EV power plants 340. Alternatively, when renewable energy-based power generation is performed, carbon emission rights are provided to the EV power plant 340 performing renewable energy-based power generation, and the EV power plant 340 may sell the carbon emission rights, thereby acquiring E-points.

Power generation-related data of the EV power plant 340 may also be transmitted as EV eco data to the EV ecosystem management device.

The EV ecosystem environment may be implemented as described above, and this EV ecosystem environment is one example in which various other EV ecosystem participation devices may operate with various industrial and economic relationships within the EV ecosystem environment.

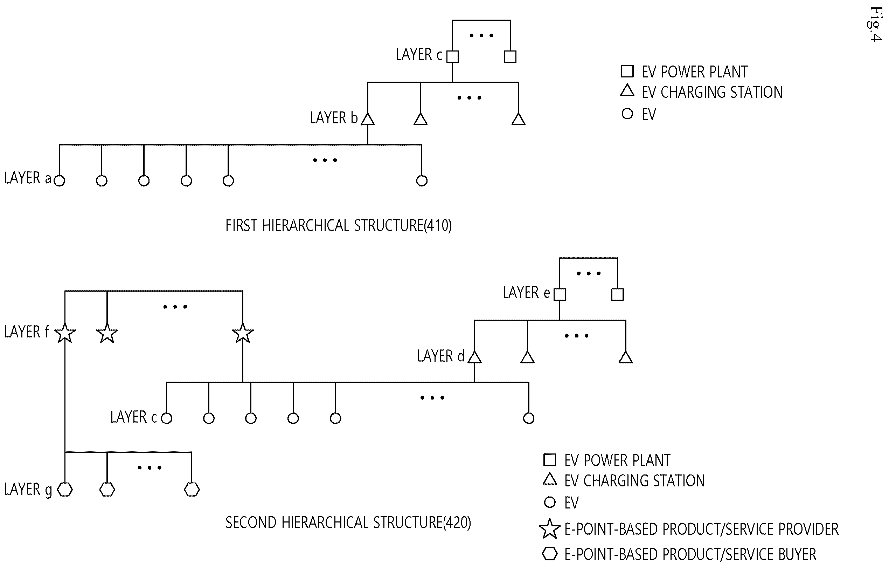

FIG. 4 is a conceptual diagram illustrating the operation of the EV ecosystem participation device management unit according to an embodiment of the present invention.

In FIG. 4, a method of generating a hierarchical relationship between EV ecosystem participation devices by an EV ecosystem participation device management unit is disclosed.

Referring to FIG. 4, the EV ecosystem participation device management unit may form a hierarchical structure between EV ecosystem participation devices. The hierarchical structure between EV ecosystem participation devices may be used to group EV ecosystem participation devices and manage issuance and cancellation of E-points based on E-point usage data within the EV ecosystem participation device groups.

The hierarchy between EV ecosystem participation devices may form a first hierarchical structure 410 based on production, sales, and consumption of electrical energy.

The first hierarchical structure 410 may be formed in the order of EV power plants generating electrical energy, EV charging stations selling the electrical energy supplied through the EV power plants, and EVs receiving the electricity from the EV charging stations. In the first hierarchical structure 410, the EVs may be located in layer a, the EV charging stations in layer b, and the EV power plants in layer c. The hierarchy may ascend from layer a to layer b and to layer c.

More specifically, the first hierarchical structure 410 may be set based on EV eco data of the EVs, the EV charging stations, and the EV power plants. For example, EV charging stations 1 to n receiving electrical energy from EV power plant 1 may form a hierarchical structure, and EVs 1 to n receiving EV batteries from or charging EV batteries in EV charging station 1 may form a hierarchical structure with EV charging station 1.

An EV charging station may receive electrical energy from a plurality of EV power plants, and an EV may also receive electrical energy from a plurality of EV charging stations. Therefore, the same EV charging station and the same EV may be located in a plurality of positions within the same layer. For example, EV charging station 1 may be located in lower layers of not only EV power plant 1 but also EV power plants 2 and 3. An EV may be located in lower layers of not only EV charging station 1 but also EV charging stations 2 and 3.

In the first hierarchical structure 410, a plurality of EV charging stations sharing a larger number of similar EVs may be positioned adjacently at layer b. Also, in the first hierarchical structure 410, a plurality of EV charging stations that are closer to each other may be positioned adjacently at layer b. For example, the similarity between EV charging stations is determined based on the number of identical EVs included in lower layers thereof and the distance between the EV charging stations, and the higher the similarity between EV charging stations, the closer the EV charging stations may be arranged at layer b.

In addition, when a specific EV charging station receives electrical energy from a specific EV power plant more than a first threshold number of times within a first threshold period, the specific EV charging station may be positioned in a lower layer of the specific EV power plant.

When a specific EV receives electrical energy from a specific EV charging station more than a second threshold number of times within a second threshold period, the specific EV may be positioned in a lower layer of the specific EV charging station.

The cycle of an EV receiving electrical energy from an EV charging station is longer than the cycle of an EV charging station receiving electrical energy from an EV power plant, and the EV receiving electrical energy from the EV charging station may be an action that occurs more sporadically than the EV charging station receiving electrical energy from the EV power plant. Therefore, the second threshold period may be set relatively longer than the first threshold period, and the second threshold number of times may be set to a relatively smaller value than the first threshold number of times.

When a sporadic supply of electrical energy occurs through the above described threshold period setting and threshold number setting, an additional layer setting may not be performed in the first hierarchical structure 410, and the first hierarchical structure 410 may continuously change according to changes in industrial and economic situations.

The second hierarchical structure 420 may be formed in relation to utilization of E-points regardless of electrical energy. Considering payments for electrical energy charging of EVs, E-points may flow in the order of EVs, EV charging stations, and EV power plants. The second hierarchical structure 420 may initially be formed based on the first hierarchical structure 410.

E-points may be utilized for various other industrial and economic reasons even when not directly related to utilization of electrical energy. For example, a company that needs to purchase carbon emission rights may purchase carbon emission rights using E-points as an EV ecosystem participation device, and sell products and services based on E-points. In addition, even without operating EVs, individuals may sell carbon emission rights to convert the carbon emission rights to E-points and then purchase products and services of a specific company using the E-points. EV ecosystem participation devices corresponding to such companies and individuals may also be positioned in the second hierarchical structure 420 as layers that purchase E-points and receive E-points in exchange for product/service sales.

The E-point-based second hierarchical structure 420 may generate relationships between upper and lower layers based on the flow of E-points. The party paying E-points is set as the lower layer, and the party receiving E-points may be set as the upper layer.

When E-points are paid n or more times during a third threshold period, the hierarchy may be maintained in the second hierarchical structure 420, and when E-points are paid less than n times during the third threshold period, the hierarchy may be deleted. The third threshold period and n may be set differently for each layer, and economic and industrial relationships become stronger at higher levels of the hierarchy. Therefore, the third threshold period may become relatively shorter, and n may relatively increase.

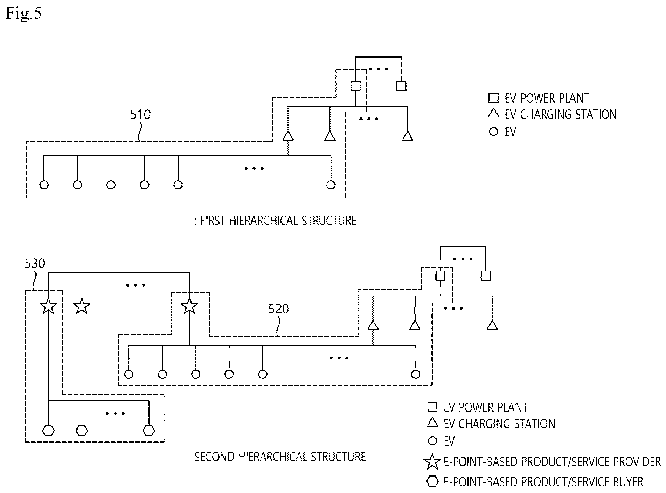

FIG. 5 is a conceptual diagram illustrating the operation of the EV ecosystem participation device management unit according to an embodiment of the present invention.

FIG. 5 shows a method of grouping EV ecosystem participation devices based on hierarchical relationships between EV ecosystem participation devices in the EV ecosystem participation device management unit.

Referring to FIG. 5, EV ecosystem participation devices may be grouped based on the first hierarchical structure and the second hierarchical structure and thus EV ecosystem participation device groups may be determined.

The EV ecosystem participation device groups may be primarily determined based on the first hierarchical structure. The first EV ecosystem participation device group may be determined considering relationships between EVs, EV charging stations, and EV power plants based on the flow of electrical energy.

The first EV ecosystem participation device group 510 may be formed considering EV charging station groups. EV charging stations with similarity greater than or equal to a threshold in layer b are grouped into a single EV charging station group, and EVs and EV power plants associated with the single EV charging station group may be set as a single first EV ecosystem participation device group 510.

The first EV ecosystem participation device group 510 may be expanded based on the second hierarchical structure. The second hierarchical structure is a hierarchical structure considering the flow of E-points. Considering consumption of E-points by users of EVs included in the first EV ecosystem participation device group 510, EV ecosystem participation devices that providing products and services based on E-points may additionally be included in the first EV ecosystem participation device group 510 and thus a second EV ecosystem participation device group 520 may be determined.

In addition, users who do not operate EVs but consume products and services based on E-points and EV ecosystem participation devices that provide products and services based on E-points may be set as a third EV ecosystem participation device group 530.

That is, the second EV ecosystem participation device group 520 may be determined by expanding the first EV ecosystem participation device group 510, and the third EV ecosystem participation device group 530 may be generated independently of the first EV ecosystem participation device group 510.

According to an embodiment of the present invention, the management of E-points may be performed based on the EV eco data generated from the first EV ecosystem participation device group 510, the second EV ecosystem participation device group 520, and the third EV ecosystem participation device group 530.

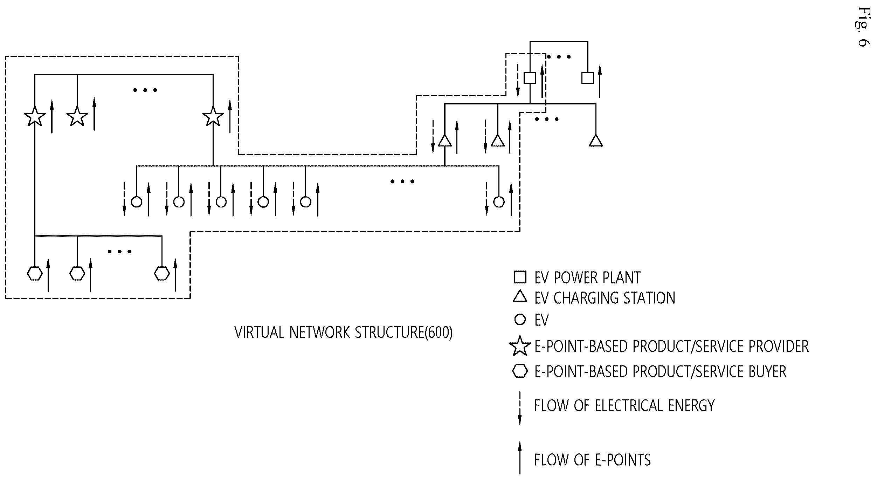

FIG. 6 is a conceptual diagram illustrating a method of managing a network by the EV ecosystem network management unit according to an embodiment of the present invention.

In FIG. 6, a method for the EV ecosystem network management unit to set a network based on relationships between EV ecosystem participation devices is disclosed.

Referring to FIG. 6, the EV ecosystem network management unit may set network relationships between EV ecosystem participation devices considering the first EV ecosystem participation device group, the second EV ecosystem participation device group, and the third EV ecosystem participation device group.

EV eco data generated from EV ecosystem participation devices may include group identification information for EV ecosystem participation device groups including EV ecosystem participation devices.

The EV ecosystem network management unit may form a virtual network structure 600 for EV ecosystem participation device groups considering the first hierarchical structure and the second hierarchical structure. The virtual network structure 600 may not be a physical network structure but a structure considering the hierarchical structures of EV ecosystem participation devices and the EV ecosystem participation device groups.

The virtual network structure 600 may be utilized to process and analyze EV eco data. E-points included in EV eco data, E-points in EV eco data, such as movement of electric energy, and movement data of electric energy may be processed and analyzed on the virtual network structure and utilized as units of analysis for economic activities.

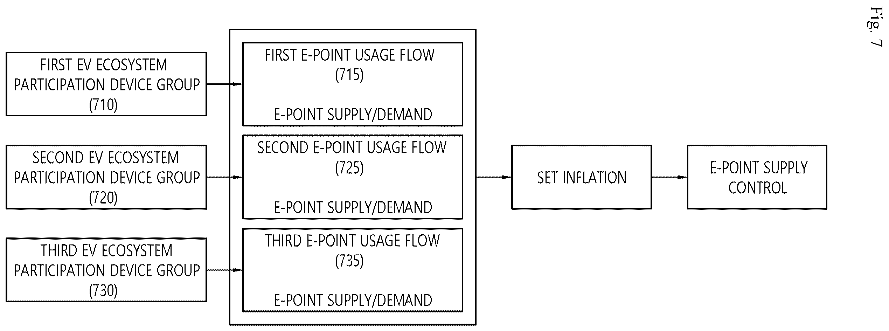

FIG. 7 is a conceptual diagram illustrating a method of managing E-points within an EV ecosystem environment based on ecosystem participation device groups according to an embodiment of the present invention.

In FIG. 7, a method of managing the supply and demand of E-points within EV ecosystem participation device groups to manage the volatility of E-points is disclosed.

Referring to FIG. 7, an E-point supply and an E-point demand may be extracted for each EV ecosystem participation device group through analysis of the supply and demand of E-points in each of a first EV ecosystem participation device group 710, a second EV ecosystem participation device group 720, and a third EV ecosystem participation device group 730.

First, the flow of E-point usage according to supply/demand of electrical energy may be determined based on the E-point supply and the E-point demand in the first EV ecosystem participation device group 710.

In addition, the flow of E-point usage according to supply/demand of electrical energy and the flow of E-point usage, other than for electrical energy, by EV ecosystem participation devices directly related to electrical energy supply/demand may be determined based on the E-point supply and the E-point demand in the second EV ecosystem participation device group 720.

Furthermore, the flow of E-point usage, other than for electrical energy, by ecosystem participation devices with low relevance to electrical energy may be determined based on the E-point supply and the E-point demand in the third EV ecosystem participation device group 730.

The flow of E-point usage based on the first EV ecosystem participation device group 710 may be referred to as "first E-point usage flow 715." The flow of E-point usage based on the second EV ecosystem participation device group 720 may be referred to as "second E-point usage flow 725." The flow of E-point usage based on the third EV ecosystem participation device group 730 may be referred to as "third E-point usage flow 735."

Based on the first E-point usage flow 715, the second E-point usage flow 725, and the third E-point usage flow 735, the supply and demand of E-points in each usage area may be determined, and the value fluctuations of E-points may be managed considering the usage areas.

For example, an overall inflation rate and an inflation rate for each usage area are set, and considering the first E-point usage flow 715, the second E-point usage flow 725, and the third E-point usage flow 735, E-points supplied to the first EV ecosystem participation device group 710, the second EV ecosystem participation device group 720, and the third EV ecosystem participation device group 730 may be adjusted to determine an E-point value within the overall inflation rate.

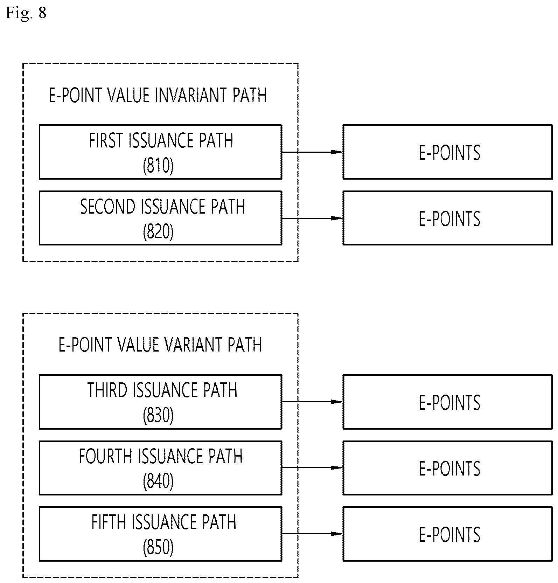

FIG. 8 is a conceptual diagram illustrating an operation of an EV ecosystem point management unit according to an embodiment of the present invention.

In FIG. 8, a method of managing the generation of E-points by an EV ecosystem point management unit is disclosed.

Referring to FIG. 8, the issuance of E-points may be achieved through various paths.

A first issuance path 810 of E-points may be issuance based on fiat currency. When fiat currency is deposited, the fiat currency may be converted to E-points at a set first exchange rate. The first exchange rate may be determined based on an exchange rate between the fiat currency and E-points.

A second issuance path 820 of E-points may be issuance based on cryptocurrency. When cryptocurrency is deposited, the cryptocurrency may be converted to E-points at a set second exchange rate. The second exchange rate may be determined based on the exchange rate between the cryptocurrency and E-points.

A third issuance path 830 of E-points may be issuance based on the production of electric energy. An EV power plant may produce electric energy, and the produced electric energy may be settled and converted based on E-points. Electric energy may be settled based on previously generated E-points but may also be settled based on newly generated E-points. The case in which electric energy is settled based on newly issued E-points may be issuance of E-points through the third issuance path.

A fourth issuance path 840 of E-points may be issuance through sales of services and products by EV ecosystem participating devices. Services and products provided by EV ecosystem participating devices may be settled based on newly issued E-points. Services and products of EV ecosystem participating devices may be settled based on previously generated E-points but may also be settled based on newly generated E-points. The case in which services or products are settled based on newly issued E-points may be issuance of E-points through the fourth issuance path.

A fifth issuance path 850 of E-points may be issuance through sales in carbon emission rights trading by EV ecosystem participating devices. Individuals or companies with EV ecosystem participating devices may settle carbon emission rights based on newly issued E-points. Carbon emission rights of EV ecosystem participating devices may be settled based on previously generated E-points but may also be settled based on newly generated E-points. The case in which carbon emission rights are settled based on newly issued E-points may be issuance of E-points through the fifth issuance path 850.

The first issuance path 810, the second issuance path 820, the third issuance path 830, the fourth issuance path 840, and the fifth issuance path 850 are examples, and E-points may flow into the EV ecosystem through various other issuance paths.

The E-points issued through the first issuance path 810 and the second issuance path 820 may be E-points exchanged based on currency. The E-points issued through the third issuance path 830, the fourth issuance path 840, and the fifth issuance path 850 may be E-points issued in exchange for energy, services, products, and carbon emission rights.

The paths through which E-points flow in through exchange with other currencies, such as the first issuance path 810 and the second issuance path 820, may be referred to as "E-point value invariant paths," and the paths through which E-points flow in based on non-currency products, services, and rights, such as the third issuance path 830, the fourth issuance path 840, and the fifth issuance path 850, may be referred to as "E-point value variant paths."

The EV ecosystem point management unit may immediately convert cryptocurrency and fiat currency exchanged for E-points through the first issuance path 810 and the second issuance path 820 into stable currency (dollars, won, stablecoins, and the like) to reduce the price volatility for E-points.

For the third issuance path 830, the fourth issuance path 840, and the fifth issuance path 850, the inflow of E-points into the EV ecosystem may increase, and the EV ecosystem point management unit may adjust the price of E-points and readjust the exchange rate of E-points with fiat currency considering the increase in the inflow of E-points, fluctuations in the prices of electric energy, fluctuations in the prices of products and services, fluctuations in the prices of carbon emission rights, a set inflation rate and the like.

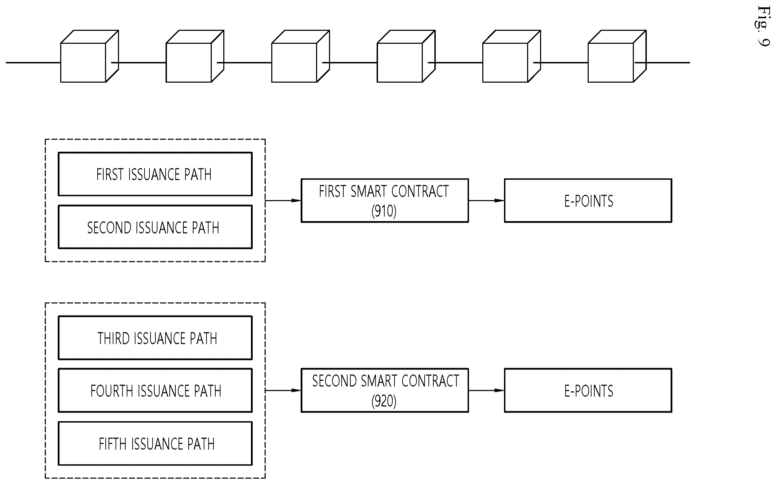

FIG. 9 is a conceptual diagram illustrating the operation of the EV ecosystem point management unit according to an embodiment of the present invention.

FIG. 9 shows a method of managing E-point generation by the EV ecosystem point management unit based on blockchain.

Referring to FIG. 9, when E-points are generated through the first and second issuance paths, a first smart contract 910 on a blockchain may generate E-points based on deposited fiat currency and cryptocurrency considering a time-based exchange rate.

The first smart contract 910 may be implemented to determine E-points corresponding to fiat currency or cryptocurrency deposited to a specific address and generate the determined E-points and transmit the generated E-points to a set address.

When E-points are generated based on the third, fourth, and fifth issuance paths, a second smart contract 920 on the blockchain may determine and provide E-points corresponding to the prices of electric energy, products/services, carbon emission rights, and the like, considering the respective prices thereof at the time of exchange.

The prices of electric energy, products/services, and carbon emission rights may be set by EV ecosystem participating devices providing electric energy, products, services, and carbon emission rights, and may be included and transmitted in transactions.

The second smart contract 920 may receive information about the current prices of electric energy, products, services, and carbon emission rights from an EV ecosystem network management unit, and process transactions transmitted by EV ecosystem participating devices by reflecting the information, to transmit E-points to the EV ecosystem participating devices.

The second smart contract 920 may be implemented to set a threshold number of E-points that may be issued considering a set inflation rate, and when the threshold number of E-points is exceeded, transmit an alarm regarding the increase in the number of E-points to the EV ecosystem network management unit.

In addition, when the number of E-points issued based on the second smart contract 920 exceeds the threshold number of E-points, E-points may be purchased using deposited fiat currency or cryptocurrency to reduce the number of E-points within the EV ecosystem, and perform adjustment such that the change in E-point value does not exceed the set inflation rate.

The set inflation rate may be adaptively adjusted considering an expansion value of the EV ecosystem. As the expansion value of the EV ecosystem increases, the magnitude of the set inflation rate may increase. The expansion value of the EV ecosystem may be set larger as the number of increases in EV ecosystem participating devices and the rate of increase in EV ecosystem participating devices become relatively larger. In addition, considering data on the movement of E-points and the movement of electric energy based on EV ecosystem participating devices, the expansion value of the EV ecosystem may be set larger as the movement of E-points and the movement of electric energy are relatively faster.

That is, according to an embodiment of the present invention, the method of implementing a payment system in an EV ecosystem by an EV ecosystem management device may include: receiving, by an EV ecosystem management device, data regarding E-points within an EV ecosystem; and adjusting, by the EV ecosystem management device, issuance of the E-points based on a set inflation rate.

The data regarding E-points may include data regarding supply and demand of E-points, and the data regarding E-points may be collected based on EV ecosystem participating device groups. The set inflation rate may be adaptively adjusted considering an expansion value of the EV ecosystem.

The embodiments of the present invention described above may be implemented in the form of program instructions that can be executed through various computer units and recorded on computer readable media. The computer readable media may include program instructions, data files, data structures, or combinations thereof. The program instructions recorded on the computer readable media may be specially designed and prepared for the embodiments of the present invention or may be available instructions well known to those skilled in the field of computer software. Examples of the computer readable media include magnetic media such as a hard disk, a floppy disk, and a magnetic tape, optical media such as a compact disc read only memory (CD-ROM) and a digital video disc (DVD), magneto-optical media such as a floptical disk, and a hardware device, such as a ROM, a RAM, or a flash memory, that is specially made to store and execute the program instructions. Examples of the program instruction include machine code generated by a compiler and high-level language code that can be executed in a computer using an interpreter and the like. The hardware device may be configured as at least one software module in order to perform operations of embodiments of the present invention and vice versa.

While the present invention has been described with reference to specific details such as detailed components, specific embodiments and drawings, these are only examples to facilitate overall understanding of the present invention and the present invention is not limited thereto. It will be understood by those skilled in the art that various modifications and alterations may be made.

Therefore, the spirit and scope of the present invention are defined not by the detailed description of the present invention but by the appended claims, and encompass all modifications and equivalents that fall within the scope of the appended claims.

## Claims

1. A method of implementing a payment system in an electric vehicle (EV) ecosystem, the method comprising:
receiving, by an EV ecosystem management device, data regarding E-points within an EV ecosystem; and
adjusting, by the EV ecosystem management device, issuance of the E-points based on a set inflation rate.

2. The method of claim 1, wherein:
the data regarding the E-points includes data regarding supply and demand of the E-points; and
the data regarding the E-points is collected based on EV ecosystem participating device groups.

3. The method of claim 2, wherein the set inflation rate is adaptively adjusted considering an expansion value of the EV ecosystem.

4. An electric vehicle (EV) ecosystem management device for implementing a payment system, which is implemented to:
receive data regarding E-points within an EV ecosystem; and
adjust issuance of the E-points based on a set inflation rate.

5. The EV ecosystem management device of claim 4, wherein:
the data regarding E-points includes data regarding supply and demand of the E-points; and
the data regarding the E-points is collected based on EV ecosystem participating device groups.

6. The EV ecosystem management device of claim 5, wherein the set inflation rate is adaptively adjusted considering an expansion value of the EV ecosystem.
